# EUROPEAN PATENT SPECIFICATION

(11) **EP 1 187 431 B1**
(45) Date of publication and mention of the grant of the patent: **21.12.2005**
(21) Application number: 00118293.0
(22) Date of filing: 05.09.2000
(51) Int. Cl.: H04M 1/27

(54) **Portable terminal with voice dialing minimizing memory usage**
Tragbares Endgerät mit sprachgesteuertem Wählen, das den Speicherbedarf minimiert
Terminal portable avec composition vocal de numéro minimisant l'usage de mémoire

(43) Date of publication of application: 13.03.2002
(60) Divisional application: 05022457.5
(73) Proprietor: TELEFONAKTIEBOLAGET LM ERICSSON (publ), 164 83 Stockholm (SE)
(72) Inventor: Hirsch, Hans-Günter, 90652 Heroldsberg (DE); Dobler, Stefan, 91077 Neunkirchen am Brand (DE); Kiessling, Andreas, 91080 Marloffstein (DE); Schleifer, Ralph, 91058 Erlangen (DE)
(74) Representative: Pfeifer, Torsten

(56) References cited:
- EP-A- 0 376 501
- WO-A-00/28527
- US-A- 5 708 804
- RAMALINGAM C S ET AL: "Speaker-independent name dialing with out-of-vocabulary rejection" , IEEE INTERNATIONAL CONFERENCE ON ACOUSTICS, SPEECH, AND SIGNAL PROCESSING (ICASSP),US,LOS ALAMITOS, IEEE COMP. SOC. PRESS, PAGE(S) 1475-1478 XP002077563 ISBN: 0-8186-7920-4 * page 1475 - page 1476 *

## Description

### BACKGROUND OF THE INVENTION

### 1. Technical Field

The invention relates to a portable terminal for accessing an external database, wherein the external database is removably connectable to the terminal and contains a plurality of strings with one or more alphanumerical characters like letters or digits.

### 2. Discussion of the Prior Art

Many portable terminals like mobile phones or personal digital assistants (PDA) are adapted to access a personal database. The personal database can contain information relating to appointments or a personal phone book. In the personal database this information is normally stored as strings with one or more alphanumerical characters.

The personal database may just be used for looking up personal information like appointments or for executing special actions like setting up a telephone connection to a person or a company after selection of the person's or company's name. In the following, database access in mobile phones with the intention to automatically set up a call to a person or a company is further illustrated as an example.

Almost every mobile phone offers the feature of storing a personal phone book containing the names of persons and companies together with their respective telephone numbers. Usually, this personal phone book is stored in an external database like on a SIM (subscriber identity module) card. The personal phone book is thus available after the SIM card is plugged in the mobile telephone.

For setting up a call, an already existing phone book entry can be accessed by pressing a key sequence on the mobile telephone's keyboard. In order to address a name, one or more letters of the name have to be typed. The letter typing is usually done with the digit keys. Each digit key stands for three to four letters. Key "2", for example, stands for [ABC] and key "9" stands for [WXYZ]. In order to obtain the letter "W", the digit key "9" has to be pressed once. Likewise, in order to type the letter "X", the digit key "9" has to be pressed twice quickly. It is obvious that typing letters with the digit keys of a mobile phone is complicated and time consuming.

Another example for accessing an already existing phone book entry is the so-called "name dialing" functionality of mobile phones. "Name dialing" is e. g. described in the manual of Ericsson's T28s User Manual, 1^{st} ed., June 1999, pages 76-78. According to the "name dialing" functionality, a user utters a proper name which represents a phone book entry to be accessed. The name uttered by the user is recognized by means of automatic speech recognition. Then, a string matching with the recognized name is searched in the external database and the phone number associated with the matching string is automatically dialed.

The "name dialing" functionality necessitates that proper names have previously been trained as whole-word voice models and have been attached to one or more phone book entries. However, due to hardware restrictions and above all memory constraints, the number of phone book entries accessible by "name dialing" is usually restricted to only a few names because whole-word voice models have to be stored for a complete proper name.

WO 00/28527 A relates to a data processing system such as a mobile terminal with a device for recognizing acoustic objects in the form of single letters, combinations of letters or commands. Based on the recognized objects telephone book entries stored in a local telephone book are identified and retrieved. The data processing system further comprises a device for acoustically or optically outputting the recognized acoustic objects.

EP 0 376 501 describes a system that correlates verbal utterances with a sequence of textual characters by presenting a user of the system with a menu of one or more sequences of textual characters that the user may select in response to an utterance. The system also provides the user, in some circumstances, to edit selected character sequences to represent a different sequence of characters that may also be correlated with a verbal utterance. The recognition unit restricts the vocabulary used for recognition based on already recogized verbal utterances.

There is a need for a portable terminal that makes the recognition process more robust.

### SUMMARY OF THE INVENTION

The present invention satisfies this need by providing a portable terminal according to claim 1.

The portable terminal includes an interface for accessing an external database. The external database is removably connectable to the terminal and contains a plurality of strings with one or more alphanumerical characters. The portable terminal comprises an automatic speech recognizer for accessing an internal or external reference database, the reference database containing information relating to spelled alphanumerical characters comprising at least letters or digits, a processing unit for searching at least one matching string among the plurality of strings on the basis of one or more alphanumerical characters recognized by the automatic speech recognizer and an interface for accessing the external database. It may further include a string analyzing unit for providing additional and/or alternative starting points within a string for the search of the processing unit.

According to the invention, the string "MUSTERMANN" in the external database can simply be addressed by spelling e. g. the first letter "M". The ASR recognizes the letter based on the information contained in the reference database. The reference database defines the ASR's vocabulary. After recognition of the letter "M", the processing unit searches for all matching strings, e. g. for all strings beginning with or containing the recognized letter "M". In case two or more matching strings are found, a user selection may become necessary. Thereafter, the processing unit may access the selected matching string or information like a telephone number or an appointment associated with the selected matching string in the external database.

In order to access the whole external database, it is no longer necessary to provide one whole-word voice model in the reference database for each single string contained in the external database. It is sufficient to provide one whole-word voice model for each of the e. g. 26 letters of the Latin alphabet plus, if desired, for the digits zero to nine and some command words. Consequently, every string in the external database can be accessed although the number of entries in the reference database may be considerably smaller than the number of strings in the external database. The total size of the reference database is, therefore, independent from the number of strings in the external database which results in considerably smaller memory requirements regarding the reference database in case of a large number of strings in the external database. Moreover, even if strings in the external database are changed or new strings are added, the reference database need not be changed.

Whereas the reference databases of prior art portable terminals necessarily require training to generate the reference database, no such training is needed according to the invention if speaker independent automatic speech recognition is used. According to speaker independent automatic speech recognition, spelled letter-models are pre-trained based on a huge amount of speech data from many speakers. Even if speaker dependent automatic speech recognition is used and the reference database thus personalized, only the letters plus, if desired, digits and a few command words have to be trained. For large external databases, training is thus still considerably less time consuming since in the prior art every single string in the external database would have to be trained. Another advantage of the invention is the fact that no further training is needed if strings in the external database are changed or new strings are added.

The reference database containing the vocabulary recognizable by the ASR can be an external database removably connectable to the portable terminal or an internal database within the portable terminal. Preferably, the reference database is an internal database if it contains speaker independent information and an external database if it contains speaker dependent information. The reference database, however, can also be an external database and contain speaker independent information. The latter provides the possibility to employ a plurality of external reference databases, each reference database containing speaker independent information in a different language. Consequently, the same portable terminal may be distributed in different countries with different external reference databases.

In case the reference database is an external database, the reference database is preferably arranged on the same physical carrier as the external database containing the plurality of strings. Both the reference database and the external database containing the plurality of strings can e. g. be arranged on a SIM card.

The portable terminal can further comprise an intermediate memory for storing at least some strings contained in the external database. External databases are often stored in memories which are comparatively slow. In order to enhance accessibility of the strings contained in the external database, the strings are therefore loaded from the external database via the interface in the intermediate memory, e. g. immediately after the portable terminal is switched on or immediately after the external database is connected to the interface or immediately after an entry in the external database has been changed or a new entry has been added. The processing unit can thus either search the strings loaded in the intermediate memory or the strings in the external database.

According to a preferred embodiment, the processing unit is configured to start searching as soon as a first character is recognized by the ASR. Consequently, an early identification mechanism is provided since one or more matching strings containing the first recognized character can immediately be accessed and e.g. output by an output unit without waiting for the spelling of all characters contained in the string. Due to the fact that the search can be started based on a single recognized character, the probability that more than one matching string will be found is comparatively high. Therefore, it can be advantageous to provide an input unit which allows a user selection among two or more matching strings.

The portable terminal may further comprise a signaling unit for outputting acoustical or optical signals. These signals may prompt a user to start spelling one or more letters (start spelling request). The signals may also be used as a continue spelling request after a first letter has been spelled and correctly recognized. A continue spelling request is e. g. advantageous if the number of matching strings is too high to be displayed by the output unit. When implementing a signaling unit for outputting a continue spelling request, an isolated word recognition (IWR) can be employed. IWR is known to deliver more accurate results than connected word recognition (CWR) which is preferably employed to enable the user to speak more fluently.

The automatic recognition of spellings is known to be difficult due to the existence of phonetically similar and thus highly confusable letters like the so-called E-set in English, i. e. the letters B, D, T, P, etc. Therefore, the recognition process in the ASR is restricted to those sequences of alphanumerical characters actually contained in the plurality of strings in the external database. Therefore, the portable terminal further comprises a first network which defines for the ASR a currently admissible character or character sequence on the basis of the plurality of strings in the external database. By means of the first network, access of the ASR to the reference database is restricted to the currently admissible character or character sequence. The first network is realized as syntax database which contains all admissible character sequences according to the plurality of strings contained in the external database. This syntax database is generated in an internal memory of the portable terminal each time the portable terminal is switched on or each time the external database is connected to the terminal or each time a string in the external database is changed or a new string is added.

According to a further embodiment of the invention, the portable terminal can comprise a second network for rejecting out-of-vocabulary information like coughing or filled pauses (e. g. the English "uh" or the German "äh"). The second network is preferably associated with the ASR such that any recognized out-of-vocabulary information is rejected and not erroneously recognized as an alphanumerical character.

Preferably, the portable terminal comprises a string analyzing unit which provides additional or alternative starting points for the search within one or more of the plurality of strings. Upon recognition of one or more spelled alphanumerical characters by the ASR, the processing unit will thus not only start its search at the beginning of the strings but also or alternatively at character positions within the string. Consequently, a string containing e. g. a person's first name and last name can be accessed by spelling the first letters of the last name as well as by spelling the first letters of the first name. Likewise, a string containing e. g. a person's name, a person's telephone number and a person's address can be accessed by either spelling the first letters of the name, the first digits of the phone number or the first letters occurring in the person's address.

It should be noted that although the portable terminal according to the invention is adapted to access the external database, the external database itself need not necessarily be connected to the portable terminal. However, according to a preferred embodiment, the external database is connected to the portable terminal via the terminal's interface.

### BRIEF DESCRIPTION OF THE DRAWINGS

Further aspects and advantages of the invention will become apparent upon reading the following detailed description of a preferred embodiment of the invention and upon reference to the drawings in which:
- Fig. 1: shows a schematic diagram of a mobile phone according to the invention; and
- Fig. 2: shows a first network defining a currently admissible character or character sequence.

### DESCRIPTION OF THE PREFERRED EMBODIMENT

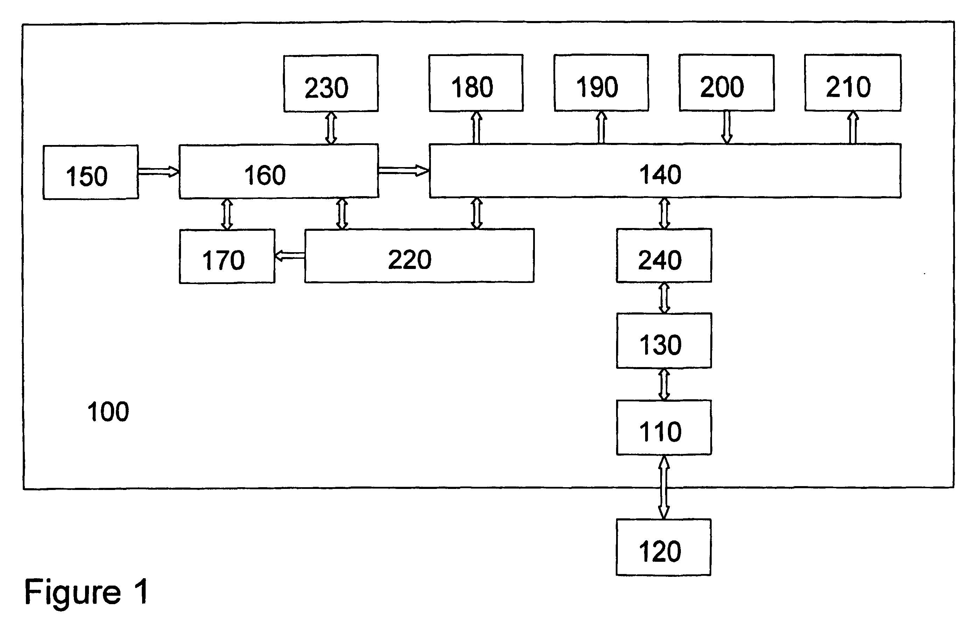

In Figure 1, a schematic diagram of an embodiment of a portable terminal according to the invention is illustrated. A mobile phone 100 depicted in Figure 1 comprises an interface 110 for accessing an external database 120 containing a personal phone book. The personal phone book contains a plurality of name strings relating to the names of persons and companies and a corresponding plurality of number strings relating to the corresponding telephone numbers. Each string of the plurality of name strings is associated with the corresponding string of the plurality of number strings. The database 120 can further comprise a third plurality of strings relating to a unique number assigned to each corresponding pair of names and telephone numbers contained in the pluralities of name and number strings. Consequently, each pair of names and numbers can be addressed by a unique number. Of course, a name and a corresponding phone number may also be contained in a single string.

The external database 120 is stored on a conventional SIM card which can be connected to and removed from the interface 110.

The strings in the external database 120 stored on the SIM card are loaded in an intermediate memory 130 each time the mobile phone is switched on with the SIM card connected to the interface 110. Consequently, when searching for a matching string, a processing unit 140 of the mobile phone 100 can either access the strings stored on the SIM card or the strings in the intermediate memory 130. However, since the memory on the SIM card is often comparatively slow, it is advantageous to access the intermediate memory 130.

The mobile phone 100 has an acoustic input 150 which can be a microphone connected to an ASR 160. The ASR 160 may be realized as is known in the art. Therefore, a description of the structure and function of the ASR 160 is omitted.

All information recognizable by the ASR 160 is contained in a reference database 170. The reference database 170 can either be realized as part of the ASR 160 or as a separate database which is loaded into a memory of the ASR 160 each time the mobile phone 100 is switched on.

The reference database 170 constitutes the ASR's 160 vocabulary and contains all necessary information allowing at least recognition of spelled letters. This information can consist e. g. of words relating to standardized spelling alphabets like the NATO alphabet (Alpha, Bravo, Charly, ...) or of personally defined spelling alphabets. The use of personally defined spelling alphabets is only possible when speaker dependent automatic speech recognition techniques are employed. Alternatively or additionally, the reference database can contain words relating to the natural pronunciation of letters, i. e. corresponding to the phonetic transcription of letters. Thus, according to the most simple embodiment of the reference database 170, the entries in the reference database 170 consist only of the 26 words of a spelling alphabet or of naturally pronounced letters. For such a small reference database, a robust and speaker independent recognition can be realized even under adverse environmental conditions. Although the reference database 170 preferably contains words relating to the spelled letters, it is also feasible to build the reference database from those phonemes or phoneme combinations required to construct spelled letters.

The reference database 170 can further contain information relating to the ten digits zero to nine and to some command words. In case the reference database contains information relating to digits, a string in the external database 120 containing a telephone number may also be accessed by uttering one or more single digits (Digit dialing). Preferably, the processing unit 140 starts searching for matching number strings as soon as the first digit is recognized by the ASR 160. Consequently, the processing unit may find two or more matching telephone numbers so that a user selection among all matching telephone numbers may become necessary.

Digit dialing enables the user to utter e. g. the digits of an area code to view all number strings containing the area code or all name strings associated with number strings containing this area code. In some cases, it might be faster to set up a telephone connection by uttering the first digits of a number string than by uttering the first letters of the name of a person to be called.

A possible command word contained in the reference database 170 can be "SPELL" to indicate that the user wishes to initialize a call by spelling a name contained in the external database. Other possible command words are e. g. "YES" for user acknowledgments or "NEXT", "PREVIOUS", "START", etc. for scrolling within the external database or within several matching strings found by the processing unit and output by an output unit 180, e. g. a graphics or alphanumeric display.

Suppose that there exist several name strings like "MUSTERMANN HOME", "MUSTERMANN WORK" etc. and corresponding number strings in the external database 120. In order to initialize a call, the user starts with speaking the command word "SPELL". Thereafter, the user spells the first two letters "M" and "U". The output unit 180 then displays "MUSTERMANN HOME" followed by a graphical icon like an arrow indicating that there are further name strings in the external database 120 starting with the letters "M" and "U". The user speaks the command word "NEXT" and the output unit 180 displays "MUSTERMANN WORK". If the user wants to call Mustermann at work, he speaks "YES" and the output unit 180 displays "CALLING ...".

In the example described above, a user selection among the two matching name strings "MUSTERMANN HOME" and "MUSTERMANN WORK" is made by speaking the command words "NEXT" and "YES". Additionally, a separate input unit 200 is provided for allowing a user selection among several concurrently displayed matching name strings by e. g. pressing a key of the mobile phone associated with the matching string to be selected. The input unit 200 can also comprise a wheel or two or more keys for scrolling the matching strings and a further key for acknowledging a user selection among the matching strings.

As soon as a user acknowledges, e. g. by speaking the command word "YES" or by pressing a key of the mobile phone 100, that he wishes to start a call on the basis of a matching name string, a dialing unit 190 associated with the processing unit 140 dials the corresponding telephone number. As explained above, the telephone number is contained in the corresponding number string associated with the matching name string. The content of the corresponding number string is transferred by the processing unit 140 from e. g. the intermediate memory 130 to the dialing unit 190.

In order to allow use of IWR and to thus improve the recognition probability of letter sequences, the mobile phone 100 comprises a signaling unit 210 which outputs an acoustical start spelling request after the user speaks the command word "SPELL". Moreover, the user is asked to produce short pauses after each letter by an acoustical continue spelling request.

In order to accelerate and facilitate a call, the mobile phone 100 further comprises two networks 220, 230 and a string analyzing unit 240.

The first network 220 is configured as a syntax database which defines a currently admissible character or character sequence and restricts access of the ASR 160 to specific information within the reference database 170.

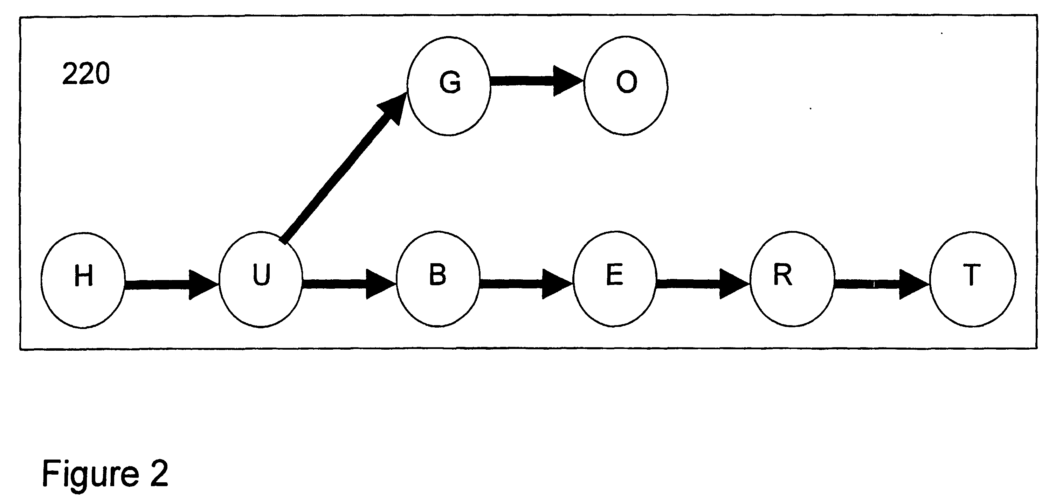

As depicted in Figure 2, the first network 220 can be imagined to have the structure of a tree. Suppose for example that the external database 120 only contains the two name strings "HUGO" and "HUBERT" as well as the two corresponding number strings. If a user starts spelling, access of the ASR 160 to the reference database 170 is restricted by the first network 220 to the first letter "H" since the external database contains no name string with a first letter different from "H". Likewise, access of the ASR 160 to the reference database 170 is restricted to the letter "U" in case the second letter is spelled and to the letters "G" and "B" in case the third letter is spelled.

The third letters "G" and "B" both are members of the E-set. Therefore, there exists a certain probability that e.g. one of the incorrect letter sequences "HUE" and "HUP" is recognized by the ASR 160 instead of one of the correct letter sequences "HUB" and "HUG". Due to the first network 220, however, incorrect letter sequences like "HUE" or "HUP" can not be utilized as a basis for the search for a matching string.

Consequently, the first network 220 makes the recognition process faster and more robust since the possible output of the ASR 160 is restricted to those letters or letter sequences actually occurring in the strings of the external database 120 at a given position within the strings.

In the embodiment depicted in Fig. 1, the first network 220 communicates via the processing unit 140 with the external database 120 to generate a syntax database constituting the first network 220. Moreover, the first network 220 communicates with both the ASR 160 and the reference database 170 to restrict the ASR's 160 access to the reference database 170.

The second network 230 of the mobile phone 100 rejects out-of-vocabulary information to make the recognition process more robust. In case the ASR 160 recognizes out-of-vocabulary information, this information is automatically rejected and not output to the processing unit 140. Out-of-vocabulary information comprises certain background noises as well as verbal or non-verbal (e.g. filled pauses) articulatory productions made by the user.

The string analyzing unit 240 is arranged between the processing unit 140 and the intermediate memory 130 searched by the processing unit 140. The string analyzing unit 240 provides additional or alternative starting points within a string for the search if necessary.

If, for example, a string contains both a person's last name and first name, the string analyzing unit provides two different starting points for the search within this string. The first starting point is defined by the beginning of the person's first name and the second starting point by the beginning of the person's last name. Consequently, if a first spelled letter is recognized by the ASR 160 and output to the processing unit 140, the processing unit checks if the recognized letter is either present at the beginning of the first name or at the beginning of the last name. Consequently, the name string is output as a matching string if either the first letter of the first name or the first letter of the last name corresponds to the recognized letter. The string analyzing unit 240 can provide starting points at or after each word boundary, e. g. after a blank, a dot or a slash is detected in a text string.

The string analyzing unit 240 is e.g. especially advantageous if there exist several name strings comprising a person's scientific degree like "DR. KOCH", "DR. BRINKAMM" etc. Due to the presence of the string analyzing unit 240, the name string "DR. KOCH" can simply be addressed by spelling "K" and "O" thus allowing to omit spelling of "DR." since the dot is recognized as word boundary.

It is possible to combine phone book access by recognition of spelled characters with the already existing speaker dependent "name dialing" functionality so that a phone book entry can both be addressed by speaking the whole name as well as by spelling one or more characters contained in the name. Consequently, a third person using the mobile phone can at least address phone book entries by speaker independent letter recognition.

The portable terminal according to the invention is not limited to mobile phones but can also be realized e. g. as personal digital assistant. Moreover, the strings contained in the external database need not be restricted to name strings and number strings but can also relate e. g. to appointments and data relating to appointments like the date of an appointment. Besides, the terminal according to the invention may also be used for dictation of short messages (SMS) or for recognition of spelled words for wireless application protocol (WAP) access.

The letter recognition can also be used for programming the external database itself. Thus, new strings like name strings and corresponding number strings can be inserted. Up to now, this is even more cumbersome than phone book access because the complete names and numbers have to be typed in letter by letter and digit by digit.

According to the invention, a new name string can be simply generated by spelling the corresponding name by means of e.g. a standard alphabet or natural pronunciation. Likewise, a corresponding telephone number string can be generated by simply speaking the digit sequence of the telephone number. The recognition problem here is much more difficult because the vocabulary is not known. However, the recognition could be supported by so-called statistical language models trained on large text corpora containing many different names.

## Claims

1. A portable terminal (100) comprising:
- an interface for accessing an external database (120) that is removably connectable to the terminal (100), the external database (120) containing a plurality of strings with one or more alphanumerical characters;
- a syntax database (220) defining a currently admissible character or character sequence on the basis of the plurality of strings contained in the external database (120);
- an automatic speech recognizer (160) for accessing an internal or external reference database (170), the reference database (170) containing information relating to spelled alphanumerical characters comprising at least letters or digits, wherein access of the automatic speech recognizer (160) to the reference database (170) is restricted by the syntax database (220) to the currently admissible character or character sequence;
- a processing unit (140) for searching at least one matching string among the plurality of strings on the basis of one or more alphanumerical characters recognized by the automatic speech recognizer (160)
**characterized in that** in the syntax database (220) is generated in an internal memory of the terminal (100) when the terminal (100) is switched on, when the external database is connected to the terminal (100) or when a string in the external database is changed or a new string is added.

2. The terminal (100) according to claim 1, further comprising a string analyzing unit (240) for providing additional and/or alternative starting points within a string for the search of the processing unit (140).

3. The terminal according to any of the preceding claims, further comprising an intermediate memory (130) for storing at least some strings contained in the external database.

4. The terminal according to any of the preceding claims, wherein the processing unit (140) is configured to start searching as soon as a first character is recognized by the automatic speech recognizer (160).

5. The terminal according to one of any of the preceding claims, further comprising an output unit (180) for outputting one or more matching strings.

6. The terminal according to any of the preceding claims, further comprising a signaling unit (210) for outputting a start spelling request and/or a continue spelling request.

7. The terminal according to any of the preceding claims, further comprising an input unit (200) for allowing a user selection among two or more matching strings.

8. The terminal according to any of the preceding claims, further comprising a dialing unit (190) for dialing a telephone number contained in or assigned to a matching string.

9. The terminal according to any of the preceding claims, wherein the reference database (170) additionally contains information relating to least one of spelling alphabet and/or command words.

10. The terminal according to any of the preceding claims, further comprising a first network (220) defining a currently admissible character or character sequence on the basis of the plurality of strings.

11. The terminal according to claim 10, wherein access of the automatic speech recognizer (160) to the reference database (170) is restricted to the currently admissible character or character sequence by means of the first network (220).

12. the terminal according to any of the preceding claims, further comprising a second network (230) for rejecting out-of-vocabulary information.

13. The terminal according to any of the preceding claims, further comprising the external database (120) connected to the interface (110).

14. The terminal according to any of the preceding claims, wherein the external database (120) or the external database (120) and the reference database (170) are stored on a SIM card and wherein the terminal (100) is a mobile phone.

15. The terminal according to any of the preceding claims, wherein the information relating to spelled alphanumerical characters available to the automatic speech recognizer (160) is used to enable programming of the external data base (120).

## Patentansprüche

1. Tragbares Endgerät (100), umfassend:
- eine Schnittstelle zum Zugreifen auf eine externe Datenbank (120), die abnehmbar an das Endgerät (100) angeschlossen ist, wobei die externe Datenbank (120) eine Vielzahl von Zeichenketten mit einem oder mehreren alphanumerischen Zeichen enthält;
- eine Syntaxdatenbank (220), die ein aktuell zulässiges Zeichen oder eine Zeichenfolge auf der Basis der Vielzahl von Zeichenketten definiert, die in der externen Datenbank (120) enthalten sind;
- eine automatische Spracherkennungsvorrichtung (160) zum Zugreifen auf eine interne oder externe Referenzdatenbank (170), wobei die Referenzdatenbank (170) Informationen enthält, die sich auf buchstabierte alphanumerische Zeichen beziehen, die wenigstens Buchstaben oder Zahlen umfassen, wobei der Zugriff der automatischen Spracherkennungsvorrichtung (160) auf die Referenzdatenbank (170) durch die Syntaxdatenbank (220) auf das aktuell zulässige Zeichen oder die Zeichenfolge beschränkt wird;
- eine Verarbeitungseinheit (140) zum Suchen wenigstens einer übereinstimmenden Zeichenkette aus der Vielzahl von Zeichenketten auf der Basis von einem oder mehreren alphanumerischen Zeichen, die durch die automatische Spracherkennungsvorrichtung (160) erkannt worden sind,
**dadurch gekennzeichnet, dass**
- die Syntaxdatenbank (220) in einem internen Speicher des Endgeräts (100) generiert wird, wenn das Endgerät (100) eingeschaltet wird, wenn die externe Datenbank (120) an das Endgerät (100) angeschlossen wird, oder wenn eine Zeichenkette in der externen Datenbank (120) geändert oder eine neue Zeichenkette hinzugefügt wird.

2. Endgerät (100) nach Anspruch 1, des Weiteren umfassend eine Zeichenketten-Analyseeinheit (240) zum Bereitstellen zusätzlicher und/oder alternativer Anfangspunkte innerhalb einer Zeichenkette für die Suche der Verarbeitungseinheit (140).

3. Endgerät nach irgendeinem der vorhergehenden Ansprüche, des Weiteren umfassend einen Zwischenspeicher (130) zum Speichern von wenigstens einigen Zeichenketten, die in der externen Datenbank enthalten sind.

4. Endgerät nach irgendeinem der vorhergehenden Ansprüche, wobei die Verarbeitungseinheit (140) so ausgelegt ist, dass sie zu suchen beginnt, sobald ein erstes Zeichen durch die automatische Spracherkennungsvorrichtung (160) erkannt worden ist.

5. Endgerät nach irgendeinem der vorhergehenden Ansprüche, des Weiteren umfassend eine Ausgabeeinheit (180) zum Ausgeben von einer oder mehreren übereinstimmenden Zeichenketten.

6. Endgerät nach irgendeinem der vorhergehenden Ansprüche, des Weiteren umfassend eine Signalisierungseinheit (210) zum Ausgeben einer Aufforderung zum Beginnen des Buchstabierens und/oder einer Aufforderung zum Fortsetzen des Buchstabierens.

7. Endgerät nach irgendeinem der vorhergehenden Ansprüche, des Weiteren umfassend eine Eingabeeinheit (200), um eine Benutzer-Auswahl aus zwei oder mehreren übereinstimmenden Zeichenketten zu gestatten.

8. Endgerät nach irgendeinem der vorhergehenden Ansprüche, des Weiteren umfassend eine Wähleinheit (190) zum Wählen einer Telefonnummer, die in einer übereinstimmenden Zeichenkette enthalten oder dieser zugewiesen ist.

9. Endgerät nach irgendeinem der vorhergehenden Ansprüche, wobei die Referenzdatenbank (170) zusätzlich Informationen enthält, die sich auf wenigstens eines von Buchstabier-Alphabet und/oder Befehlswörter beziehen.

10. Endgerät nach irgendeinem der vorhergehenden Ansprüche, des Weiteren umfassend ein erstes Netzwerk (220), das ein aktuell zulässiges Zeichen oder eine Zeichenfolge auf der Basis der Vielzahl von Zeichenketten definiert.

11. Endgerät nach irgendeinem der vorhergehenden Ansprüche, wobei der Zugriff der automatischen Spracherkennungsvorrichtung (160) auf die Referenzdatenbank (170) auf das aktuell zulässige Zeichen oder die Zeichenfolge mittels des ersten Netzwerks (220) beschränkt wird.

12. Endgerät nach irgendeinem der vorhergehenden Ansprüche, des Weiteren umfassend ein zweites Netzwerk (230) zum Zurückweisen von Informationen außerhalb des Vokabulars.

13. Endgerät nach irgendeinem der vorhergehenden Ansprüche, des Weiteren umfassend die externe Datenbank (120), die an die Schnittstelle (110) angeschlossen ist.

14. Endgerät nach irgendeinem der vorhergehenden Ansprüche, wobei die externe Datenbank (120) oder die externe Datenbank (120) und die Referenzdatenbank (170) auf einer SIM-Karte gespeichert sind, und wobei das Endgerät (100) ein Mobiltelefon ist.

15. Endgerät nach irgendeinem der vorhergehenden Ansprüche, wobei die Informationen, die sich auf buchstabierte alphanumerische Zeichen beziehen, die der automatischen Spracherkennungsvorrichtung (160) zur Verfügung stehen, dazu verwendet werden, um das Programmieren der externen Datenbank (120) zu ermöglichen.

## Revendications

1. Terminal portable (100) comprenant :
- une interface pour accéder à une base externe de données (120) qui peut être alternativement connectée au et déconnectée du terminal (100), la base externe de données (120) contenant une pluralité de chaînes d'un ou plusieurs caractères alphanumériques ;
- une base de données de syntaxe (220) définissant un caractère ou une séquence de caractères actuellement admissible sur la base de la pluralité de chaînes contenues dans la base externe de données (120) ;
- une unité de reconnaissance vocale automatique (160) pour accéder à une base de données interne ou externe de référence (170), la base de données de référence (170) contenant des informations relatives aux caractères alphanumériques épelés comprenant au moins des lettres ou des chiffres, moyennant quoi l'accès de l'unité de reconnaissance vocale automatique (160) à la base de données de référence (170) est restreint par la base de données de syntaxe (220) au caractère ou à la séquence de caractères actuellement admissible ;
- une unité de traitement (140) pour rechercher au moins une chaîne correspondante parmi la pluralité de chaînes sur la base d'un ou plusieurs caractères alphanumériques reconnus par l'unité de reconnaissance vocale automatique (160)
**caractérisé en ce que**
- la base de données de syntaxe (220) est générée dans un mémoire interne du terminal (100) lorsque le terminal (100) est mis en marche, lorsque la base externe de données (120) est connectée au terminal (100) ou lorsqu'une chaîne dans la base externe de données (120) est modifiée ou une nouvelle chaîne est ajoutée.

2. Terminal (100) selon la revendication 1, comprenant en outre une unité d'analyse de chaîne (240) pour fournir des points de départ supplémentaires et/ou alternatifs dans une chaîne afin de rechercher l'unité de traitement (140).

3. Terminal selon l'une quelconque des revendications précédentes, comprenant en outre une mémoire intermédiaire (130) pour mémoriser au moins certaines chaînes contenues dans la base externe de données.

4. Terminal selon l'une quelconque des revendications précédentes, dans lequel l'unité de traitement (140) est configurée afin de commencer la recherche dès qu'un premier caractère est reconnu par l'unité de reconnaissance vocale automatique (160).

5. Terminal selon l'une quelconque des revendications précédentes, comprenant en outre une unité de sortie (180) pour délivrer une ou plusieurs chaînes correspondantes.

6. Terminal selon l'une quelconque des revendications précédentes, comprenant en outre une unité de signalisation (210) pour délivrer une demande de début d'épellation et/ou une demande de poursuite d'épellation.

7. Terminal selon l'une quelconque des revendications précédentes, comprenant en outre une unité d'entrée (200) pour autoriser une sélection d'utilisateur parmi deux ou plusieurs chaînes correspondantes.

8. Terminal selon l'une quelconque des revendications précédentes, comprenant en outre une unité de composition (190) pour composer un numéro de téléphone contenu dans ou assigné à une chaîne correspondante.

9. Terminal selon l'une quelconque des revendications précédentes, dans lequel la base de données de référence (170) contient en outre des informations relatives à au moins un d'un alphabet d'épellation et/ou de mots de commande.

10. Terminal selon l'une quelconque des revendications précédentes, comprenant en outre un premier réseau (220) définissant un caractère ou une séquence de caractères actuellement admissible sur la base de la pluralité de chaînes.

11. Terminal selon la revendication 10, dans lequel l'accès de l'unité de reconnaissance vocale automatique (160) à la base de données de référence (170) est restreint au caractère ou à la séquence de caractère actuellement admissible au moyen du premier réseau (220).

12. Terminal selon l'une quelconque des revendications précédentes, comprenant en outre un second réseau (230) pour rejeter les informations inconnues hors vocabulaire.

13. Terminal selon une quelconque des revendications précédentes, comprenant en outre la base externe de données (120) connectée à l'interface (110).

14. Terminal selon l'une quelconque des revendications précédentes, dans lequel la base externe de données (120) ou la base externe de données (120) et la base de données de référence (170) sont stockées sur une carte SIM et dans lequel le terminal (100) est un téléphone mobile.

15. Terminal selon l'une quelconque des revendications précédentes, dans lequel les informations relatives aux caractères alphanumériques épelés disponibles au unité de reconnaissance vocale automatique (160) sont utilisées pour permettre la programmation de la base externe de données (120).
